# EUROPEAN PATENT SPECIFICATION

(11) **EP 3 162 782 B1**
(45) Date of publication and mention of the grant of the patent: **06.05.2020**
(21) Application number: 15811594.9
(22) Date of filing: 02.03.2015
(51) Int. Cl.: C04B 41/45, B28D 1/00, C04B 41/48

(54) **METHOD FOR TREATING STONE BLOCKS**
VERFAHREN ZUR BEHANDLUNG VON STEINBLÖCKEN
PROCÉDÉ DE TRAITEMENT DE BLOCS DE PIERRE

(30) Priority: 24.06.2014 CN 201410288724
(43) Date of publication of application: 03.05.2017
(73) Proprietor: Hunan Kosen New Material Co., Ltd., Changsha, Hunan 410100 (CN)
(72) Inventor: ZHENG, Baochang, Changsha Hunan 410100 (CN); ZHONG, Xueqin, Changsha Hunan 410100 (CN); LIU, Xiongce, Changsha Hunan 410100 (CN); SHEN, Dingzhong, Changsha Hunan 410100 (CN); WANG, Liyao, Changsha Hunan 410100 (CN)
(74) Representative: Potter Clarkson
(86) International application number: PCT/CN2015/073487
(87) International publication number: WO 2015/196826

(56) References cited:
- EP-A1- 1 229 007
- EP-A1- 1 943 199
- WO-A1-2005/077645
- WO-A1-2007/054995
- CN-A- 1 446 185
- CN-A- 101 304 855
- CN-A- 101 331 097
- CN-A- 102 690 080
- CN-A- 103 737 727
- CN-A- 103 737 727
- CN-A- 104 276 847
- CN-U- 202 911 002

## Description

### FIELD OF THE INVENTION

The present application relates to a method for treating stone blocks.

### BACKGROUND OF THE INVENTION

Stones are not only products of stone mines, but also raw materials of sheet material processing plant. They refer to the stone blocks having certain specifications, which meets the requirements of sheet material processing or other purposes. Almost all of the stones supplied by the stone mines have the flaws of uneven internal constructions, many cracks and voids, easy to collapse in the edge and corner during transportation, and easily broken and scrapped during sawing, etc.

In order to solve the above-mentioned problems, a method for treating stone blocks is used in the prior art, that is, wrapping the surface of a stone block by a plastic membrane and sealing it, then vacuum-pumping it followed by injecting a reinforcing glue into the sealed space between the plastic membrane and the stone block. The reinforcing glue flows and permeates along the stone block, and when the reinforcing glue is cured, the process of treating the stone block is completed.

CN103737727A discloses a method for treating a stone block with a vacuum comb having diversion pipes, which are placed externally to a vacuum plastic bag for creating a sealed space, wherein a step of creating vacuum in the plastic bag through the diversion pipe into the sealed space is applied. The diversion pipe is also provided with a vacuum meter without further indications of its use.

WO2005/077645A1 discloses a process for treating marble blocks, in which marble blocks are covered with a draining layer, before the block is inserted into a plastic bag, for creating vacuum inside the bag and then resin is poured into the bag by means of an adaptor while the vacuum was maintained until the completion of dryness of the resin.

However, in the above-mentioned method, the speed of the glue injection is too slow during the process of the glue injection, which affects the efficiency of the stone block treatment, and the effect of the glue injection is not good.

Therefore, how to design a method for treating a stone block which can improve the speed of glue injection in the process of treating the stone block, thereby shortening the operating time, and improving the stone block treatment effect is an urgent problem to be solved by those skilled in art.

### SUMMARY OF THE INVENTION

In order to solve the above-mentioned technical problem, the present invention provides a method for treating a stone block, which can improve the speed of the glue injection in the process of treating the stone block, thereby shortening the operating time and improving the efficiency of the stone block treatment.

The technical solution provided by the present invention is as follows.

A method for treating a stone block, the method comprises the following steps of:
S₁, wrapping the stone block by a reinforcing material comprising a diversion pipe, and then wrapping the stone block by a sealing material so as to form a sealed space between the sealing material and the stone block;
S₂, pumping the sealed space so as to form a vacuum in the sealed space,
S₃, injecting a reinforcing glue into the sealed space, monitoring the vacuum degree of the sealed space, and adjusting the vacuum degree according to the monitoring result until the reinforcing glue covers the entire surface of the stone block in the sealed space,
wherein said monitoring the vacuum degree of the sealed space and adjusting the vacuum degree according to the monitoring result are specifically as follows:
injecting a reinforcing glue through the diversion pipe into the sealed space, and when the vacuum degree of the sealed space is monitored to be higher than a set value, stopping injecting the reinforcing glue, and pumping the sealed space until the vacuum degree is less than or equal to the set value, then stopping pumping the sealed space and proceeding to inject the reinforcing glue;
   or,
injecting a reinforcing glue through the diversion pipe into the sealed space, and when the vacuum degree of the sealed space is monitored to be higher than a set value, stopping injecting the reinforcing glue, and pumping the sealed space until the vacuum degree is less than or equal to the set value, then proceeding to inject the reinforcing glue while proceeding to pump the sealed space;
   or,
injecting a reinforcing glue through the diversion pipe into the sealed space, and when the vacuum degree of the sealed space is monitored to be higher than a set value, injecting the reinforcing glue while pumping the sealed space until the vacuum degree is less than or equal to the set value, then stopping pumping the sealed space.

Preferably, in step S₁, the reinforcing material further comprises one or a combination of a glass fiber net and a flow medium net.

Preferably, in step S₂, a vacuum is formed in the sealed space, and the vacuum degree of the sealed space is α, wherein, α ≤ -0.097 MPa.

Preferably, after step S₂, the method further comprises detecting whether the vacuum degree is less than or equal to -0.09 MPa in a set time threshold, wherein if the vacuum degree is less than or equal to -0.09 MPa, step S₃ is performed.

Preferably, the set time threshold is greater than or equal to 30 minutes.

Preferably, the set value is -0.097 MPa.

Preferably the method further comprises monitoring the vacuum degree of the sealed space, and adjusting the vacuum degree according to the monitoring result after step S₃, which is specifically as follows:
when the vacuum degree of the sealed space is detected beyond a set value range, pumping the sealed space.

Preferably, the set value ranges from -0.015 MPa to -0.090 MPa.

Preferably, the set value ranges from -0.030 MPa to -0.080 MPa.

Preferably, the sealing material is a plastic membrane, and the plastic membrane is any one of:
a multi-layer composite membrane of nylon and polyester ;
a multi-layer composite membrane of nylon and polyethylene;
a multi-layer composite membrane of nylon and ethylene vinyl acetate copolymer and polyethylene.

Preferably, the sealing material is sealed by a sealing tape or sealed by way of hot melting.

As compared with the prior art, the method for treating a stone block provided by the present invention avoids the vacuum degree in the sealed space becoming smaller caused in the process of glue injection so as to affect the speed and effect of glue injection, thereby improving the speed of the glue injection, and shortening the operating time, meanwhile it is conducive to the penetration of reinforcing glue into cracks in the stone block, improving the efficiency of the stone block reinforcing treatment because the present method can real-timely monitor the vacuum degree of the sealed space during the process of glue injection and sealing the stone block, and adjust the vacuum degree according to the monitoring result until the reinforcing glue covers the entire surface of the stone block in the sealed space.

### DESCRIPTION OF THE DRAWINGS

In order to illustrate the technical solutions in the examples of the present application or the prior art more clearly, the drawings which are used in the description of the examples or the prior art will be briefly introduced. It will be apparent that the drawings described below are merely some examples recited in the present application, and other drawings may be obtained by those skilled in the art based on the drawings without any creative work.

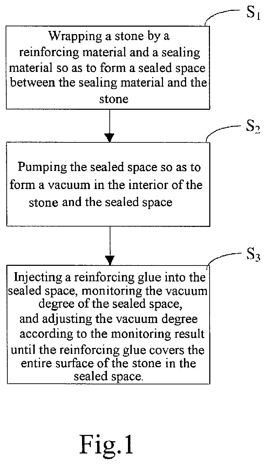

Figure 1 is a flow chart of a method for treating a stone block;
Figure 2 is a flow chart of a method for treating a stone block;
Figure 3 is a flow chart of a method for treating a stone block;
Figure 4 is a flow chart of a method for treating a stone block;

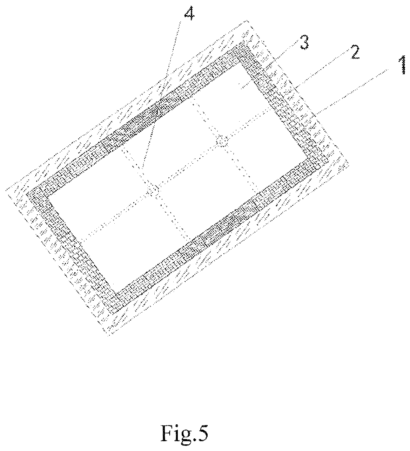

Figure 5 is a structural schematic diagram of the wrapping and sealing material for the stone block;

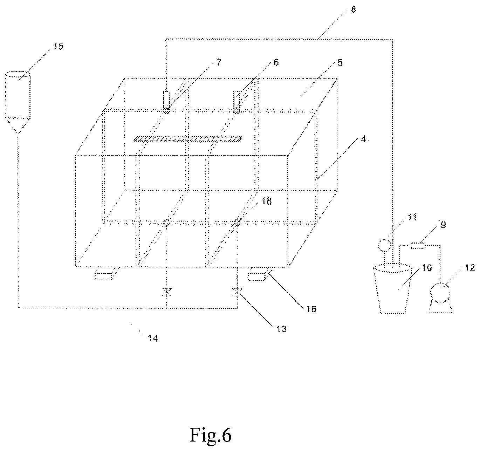

Figure 6 is a structural schematic diagram of a device for treating the stone block.

### DETAILED EMBODIMENTS OF THE INVENTION

For better understanding of the technical solutions in the present application by those skilled in the art, hereinafter the technical solutions in the examples of the present application will be described clearly and completely with reference to the drawings in the examples of the present application. It will be apparent that the described examples are merely a part of examples of the present application, but not all of the examples. Based on the examples in this application, all the other examples obtained by those skilled in the art without any creative work should fall within the scope of the present invention as defined by the claims.

The examples of the present invention provide a method for treating a stone block, the method comprises the following steps of:
S₁, wrapping the a stone block by a diversion pipe, and then wrapping the stone blocks by a sealing material so as to form a sealed space between the sealing material and the stone block.

In the step S₁ of the present example, it further comprises the step of wrapping the stone block by a reinforcing material before wrapping the stone block with the diversion pipe. Wherein, the reinforcing material in this example is preferably a glass fiber net and a flow medium net, the stone block is firstly wrapped with the glass fiber net and then wrapped with the flow medium net.

In the present example, the reinforcing material may also be a flow medium net or a glass fiber net.

Wherein, the glass fiber net refers to a woven roving made of glass fiber, which has good alkali resistance, high strength and good binding force with the modified epoxy adhesive, suitable flexibility, suitable thickness and density, and large tensile strength, so has good binding effect with the reinforcing glue. Under the binding action of the reinforcing glue, it can effectively bind with the flow medium net and sealing material.

Wherein, the flow medium net is a net structure made of polyethylene (PE) or polyethylene terephthalate (PET), and the main role thereof is to play the role of diversion during the process of reinforcing glue injection and protect the stone block in the process of transportation of the stone block.

The sealing material in this example is a plastic membrane, and at least one layer of the plastic membrane is used in the process of forming a sealed space between the plastic membrane and the stone block by wrapping stone block. In order to make a better effect of sealing, multiple layers can be used. Wherein, the plastic membrane in the present example is preferably a multilayer composite membrane of nylon and polyester (PA and PET), or a multilayer composite membrane of nylon and polyethylene (PA and PE), or a multilayer composite membrane of nylon and ethylene vinyl acetate copolymer and polyethylene (PA and EAOH and PE), these plastic membranes mentioned above have thinner thickness, strong tensile strength, and larger elongation at break. As a sealing material for wrapping stone blocks, because of their good strength, air permeability and elongation as well as good binding effect with the reinforcing glue, the wrapped stone blocks have good reinforcing effect, and being protected well in the process of transportation.

Wherein, the sealing of the plastic membrane is achieved by a sealing tape, and it also can be achieved by way of hot melting.

S₂, pumping through a diversion pipe so as to form a vacuum in the interior of the sealed space;
When the stone is wrapped, a sealed space is formed between the sealing material and the stone block, and then the step S₂ is performed. In step S₂, vacuum-pumping the sealed space is carried out through a diversion pipe. In the prior art, vacuum-pumping is directly applied to the sealed space formed between the sealing material and the stone block. As the pumping progresses, the sealing material of the plastic membrane is pressed against the stone block under the acting force of the atmosphere pressure so that the flow resistance of the air in the sealed space increases, the vacuum-pumping speed decreases, and longer operating time is required. In this example, the vacuum-pumping is carried out through a diversion pipe, and the diversion pipe is not deformed by extrusion as the pumping progresses. As compared with the prior art, it can reduce the flow resistance of air, increase the vacuum-pumping speed, shorten the operating time, and improve the efficiency.

In order to get a better effect of the reinforcing glue injection subsequently, the vacuum degree in the sealed space is required to achieve α during vacuum-pumping, wherein, α ≤ -0.097 MPa.

Wherein, the material of the diversion pipe is plastic, and the plastic material and structure adopted by the diversion pipe can ensure that the diversion pipe is not deformed under the acting force of atmospheric pressure when the vacuum degree α of the sealed space is ≤ -0.097MPa.

S₃, injecting a reinforcing glue through the diversion pipe, monitoring the vacuum degree of the sealed space, and adjusting the vacuum degree according to the monitoring result until the reinforcing glue covers the entire surface of the stone block in the sealed space.

When the vacuum-pumping is completed in the sealed space, then step S3 is performed. In step S₃, infusion of the reinforcing glue is performed for the sealed space which completes vacuum-pumping, and the infusion of reinforcing glue is achieved through the diversion pipe. The infusion of the reinforcing glue for the sealed space which completes vacuum-pumping through the diversion pipe can reduce the flow resistance of the reinforcing glue, increase the flow speed of the reinforcing glue in sealed space, shorten the time of the reinforcing glue for covering and wrapping the stone block and improve the efficiency.

The vacuum degree α in the sealed space is maintained ≤-0.097 MPa during the infusion of the reinforcing glue.

Real-time monitoring the vacuum degree of the sealed space during the process of glue injection, and adjusting the vacuum degree of the sealed space according to the monitoring result, so that the vacuum degree of the sealed space can meet the requirements, the speed and effect of the glue injection are improved, and the process is as follows.

Monitoring the vacuum degree of the sealed space with vacuum gauge during the process of glue injection. When the vacuum is higher than -0.097 MPa, stopping injecting the reinforcing glue and pumping the sealed space by a vacuum pump until the vacuum degree of the sealed space is less than or equal to -0.097 MPa, and then stopping pumping the sealed space, and proceeding to inject the reinforcing glue;
or, when the vacuum degree of the sealed space is monitored higher than -0.097 MPa, stopping injecting the reinforcing glue, and then pumping the sealed space by a vacuum pump until the vacuum degree of the sealed space is less than or equal to -0.097 MPa, and then proceeding to inject the reinforcing glue while proceeding to pump the sealed space to ensure that the vacuum degree of the sealed space is less than or equal to -0.097 MPa;
or, when the vacuum degree of the sealed space is monitored higher than -0.097 MPa, injecting the reinforcing glue while pumping the sealed space by a vacuum pump until the vacuum degree of the sealed space is less than or equal to -0.097 MPa, and then stopping pumping the sealed space.
or, when the vacuum degree of the sealed space is monitored higher than -0.097 MPa, injecting the reinforcing glue while pumping the sealed space by a vacuum pump until the glue injection is completed.

A reinforcing glue used in the invention adopts the modified epoxy adhesive, the viscosity thereof is less than 50 MPa·s at 23°C, the use time is greater than 60 minutes, the preliminary curing time is less than 4 hours, and the depth penetrating inside the rough block is more than 30 cm. It cures rapidly under the conditions of low temperature and humidity, and the characteristics of the glue membrane such as transparent and yellowing resistance, strong binding force and good security fully meet the requirements of integration treatment for the vacuum infusion and package of the stone block.

The examples provide a method for treating a stone block, the method comprises the following steps of:
S₁, wrapping the stone block by a glass fiber net, and then wrapping the stone block by a sealing material so as to form a sealed space between the sealing material and the stone block;
In step S₁ of the present example, it further comprises the step of wrapping the stone block by a flow medium net before wrapping the stone block by a glass fiber net.

Wherein, the glass fiber net refers to a woven roving made of glass fiber, which has good alkali resistance, high strength and good binding force with the modified epoxy adhesive, suitable flexibility, suitable thickness, and large tensile strength, so has good binding effect with the reinforcing glue. Under the binding action of the reinforcing glue, a glass fiber net can effectively bind with the flow medium net and sealing material.

Wherein, the flow medium net is a net structure made of polyethylene (PE) or polyethylene terephthalate (PET), the main role thereof is to play the role of diversion during the process of glue injection and protect the stone block in the process of transportation of the stone block.

The sealing material in this example is a plastic membrane, and at least one layer of the plastic membrane is used in the process of forming a sealed space between the plastic membrane and the stone block by wrapping the stone block. In order to make a better effect of sealing, multiple layers can be used. Wherein, the plastic membrane in the present example is preferably a multilayer composite membrane of nylon and polyester (PA and PET), or a multilayer composite membrane of nylon and polyethylene (PA and PE), or a multilayer composite membrane of nylon and ethylene vinyl acetate copolymer and polyethylene (PA and EAOH and PE), these plastic membranes mentioned above have thinner thickness, strong tensile strength, and larger elongation at break. As a sealing material for wrapping stone blocks, because of their good strength, air permeability and elongation as well as good binding effect with the reinforcing glue, the wrapped stone blocks have good reinforcing effect, and being protected well in the process of transportation.

Wherein, the sealing of the plastic membrane is achieved by a sealing tape, and it also can be achieved by way of hot melting.

S₂, pumping the sealed space so as to form a vacuum in the interior of the sealed space.

When the stone is wrapped, and a sealed space is formed between the sealing material and the stone block, and then the step S₂ is performed.

In order to get a better effect of the reinforcing glue injection subsequently, the vacuum degree in the sealed space is required to achieve α during vacuum pumping, wherein, α ≤ -0.097 MPa.

S₃, injecting a reinforcing glue into the sealed space, monitoring the vacuum degree of the sealed space, and adjusting the vacuum degree according to the monitoring result until the reinforcing glue covers the entire surface of the stone block in the sealed space.

When the vacuum-pumping is completed in the sealed space, step S₃ is performed. In step S₃, infusion of the reinforcing glue is performed for the sealed space which completes vacuum-pumping.

During the infusion of the reinforcing glue, the vacuum degree α in the sealed space is maintained ≤ -0.097 MPa.

Real-timely monitoring the value of the vacuum degree in the process of glue injection, if it is higher than -0.097MPa, then vacuum-pumping is performed, and there are four methods of vacuum-pumping, which are as follows:
when the vacuum degree is less than or equal to -0.097 MPa, stopping vacuum-pumping, and injecting the glue, the vacuum degree always meets the requirements;
when the vacuum degree is less than or equal to -0.097MPa, stopping vacuum-pumping, and injecting the glue, and when the vacuum degree does not meet the requirements, then injecting the glue while vacuum-pumping;
when the vacuum degree is less than or equal to -0.097MPa, stopping vacuum-pumping, and injecting the glue, when the vacuum degree does not meet the requirements, stopping injecting the glue and vacuum-pumping; when the vacuum degree meets the requirements, stooping vacuum-pumping and injecting the glue so that the reinforcing glue in the sealed space covers with the entire surface of the stone block. With time elapsing, the reinforcing glue fills with the gaps in the stone block. When the infusion of reinforcing glue is completed, the vacuum degree is maintained at -0.015 MPa to -0.090 MPa. In this example, the vacuum degree is preferably to be -0.030 MPa to -0.080 MPa until the reinforcing glue is preliminarily cured.

The reinforcing glue used in the invention adopts the modified epoxy adhesive, the viscosity thereof is less than 50 MPa·s at 23° C, the use time is greater than 60 minutes, the preliminary curing time is less than 4 hours, and the depth penetrating inside the rough blocks is more than 30 cm; It cures rapidly under the conditions of low temperature and humidity, and the characteristics of the glue membrane such as transparent and yellowing resistanance, strong binding force and good security fully meet the requirements of integration treatment for the vacuum infusion and package of the stone block.

The examples provide a method for treating a stone block, the method comprises the following steps of:
S₁, wrapping the stone block by a flow medium net, and then wrapping stone block by a sealing material so as to form a sealed space between the sealing material and the stone block;
Wherein, a flow medium net is a net structure made of polyethylene (PE) or polyethylene terephthalate (PET), the main role thereof is to play the role of diversion during the process of glue injection and protect the stone block in the process of transportation of the stone block.

The sealing material in this example is a plastic membrane, and at least one layer of the plastic membrane is used in the process of forming a sealed space between the plastic membrane and the stone block by wrapping stone block. In order to get a better effect of sealing, multiple layers can be used. Wherein, the plastic membrane in the present example is preferably a multilayer composite membrane of nylon and polyester (PA and PET), or a multilayer composite membrane of nylon and polyethylene (PA and PE), or a multilayer composite membrane of nylon and ethylene vinyl acetate copolymer and polyethylene (PA and EAOH and PE), these plastic membranes above have a thickness between 0.06 ∼ 0.16 mm, and the tensile strength thereof is more than 20 MPa, and the elongation at break is greater than 100%. As a sealing material for wrapping stone blocks, because of their good strength, air permeability and elongation as well as good binding effect with the reinforcing glue, the wrapped stone blocks have good reinforcing effect, and being protected well in the process of transportation.

Wherein, the sealing of the plastic membrane is achieved by a sealing tape, and it also can be achieved by way of hot melting.

S₂, pumping the sealed space so as to form a vacuum in the interior of the sealed space.

When the stone is wrapped, and a sealed space is formed between the sealing material and the stone block, and then the step S₂ is performed.

In order to get a better effect of the subsequent reinforcing glue injection, the vacuum degree in the sealed space is required to achieve α during vacuum pumping, wherein, α ≤ -0.097 MPa.

S₃, injecting a reinforcing glue into the sealed space, monitoring the vacuum degree of the sealed space, and adjusting the vacuum degree according to the monitoring result until the reinforcing glue covers the entire surface of the stone block in the sealed space.

When the vacuum-pumping is completed in the sealed space, step S₃ is performed. In step S₃, infusion of the reinforcing glue is performed for the sealed space which completes vacuum-pumping.

The vacuum degree α of the sealed space is maintained ≤-0.097 MPa during the infusion of the reinforcing glue.

Real-timely monitoring the value of the vacuum degree in the process of injection glue, if it is higher than -0.097 MPa, then vacuum-pumping is performed, and there are four methods of vacuum pumping, which are as follows:
when the vacuum degree of the sealed space is monitored to be higher than a set value, stopping injecting the reinforcing glue, and pumping the sealed space until the vacuum degree is less than or equal to the set value, then stopping pumping the sealed space and proceeding to inject the reinforcing glue;
or,
when the vacuum degree of the sealed space is monitored to be higher than a set value, stopping injecting the reinforcing glue, and pumping the sealed space until the vacuum degree is less than or equal to the set value, then proceeding to inject the reinforcing glue while proceeding to pump the sealed space;
or,
when the vacuum degree of the sealed space is monitored to be higher than a set value, injecting the reinforcing glue while pumping the sealed space until the vacuum degree is less than or equal to the set value, then stopping pumping the sealed space so that the reinforcing glue covers the entire surface of the stone block in the sealed space. With time elapsing, the reinforcing glue fills with the gaps in the stone block. When the infusion of reinforcing glue is completed, the vacuum degree is maintained at -0.015 MPa to -0.090 MPa. In this example, the vacuum degree is preferably to be -0.030 MPa to -0.080 MPa until the reinforcing glue is preliminarily cured.

The reinforcing glue used in the invention adopts the modified epoxy adhesive, the viscosity thereof is less than 50 MPa·s at 23° C, the use time is greater than 60 minutes, the preliminary curing time is less than 4 hours, and the depth penetrating inside the rough block is more than 30 cm. It cures rapidly under the conditions of low temperature and humidity, and the characteristics of the glue membrane such as transparent and yellowing resistance, strong binding force and good security fully meet the requirements of integration treatment for the vacuum infusion and package of the stone block.

A device for treating a stone block, comprises a wrapping and sealing material, a vacuum-pumping device and an glue-injection device.

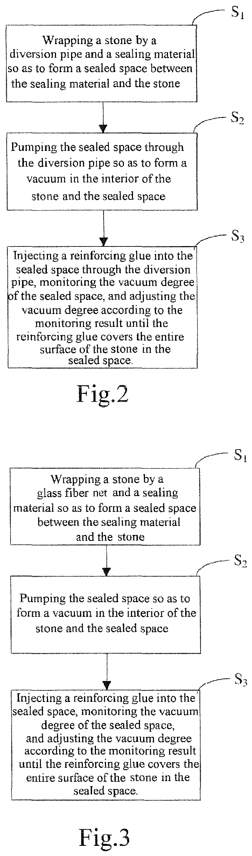

Wherein, as shown in FIG. 2, the wrapping and sealing material comprises a reinforcing material and a sealing material, which reinforcing material and sealing material sequentially wraps the stone block. The reinforcing material in this example is one or more of a diversion pipe 4, a glass fiber net 3, and a flow medium net 2. That is, the reinforcing material may be a diversion pipe 4, or a glass fiber net 3, or a flow medium net 2, or a diversion pipe 4 and a glass fiber net 3, or a diversion pipe 4 and a flow medium net 2, or a glass fiber net 3 and a diversion wire 2, or a diversion pipe 4, a glass fiber net 3 and a flow medium net 2. The sealing material is a plastic membrane 1. When the stone block is wrapped with the wrapping and sealing material, the interface of the sealing material can be sealed by the sealing tape 7, or can also be sealed by way of hot melting. The kind of sealing tape has good low temperature heat resistance, strong binding force with the plastic membrane and metal materials, and good sealing effect for the vacuum.

Depending on the size of the stone block, the number of diversion pipe 4 to be used is different. In the present embodiment, when a multiple of diversion pipes 4 are required, the effect is better when the spacing between the diversion pipes 4 which wrap the stone block is maintained at 200 mm to 1000 mm.

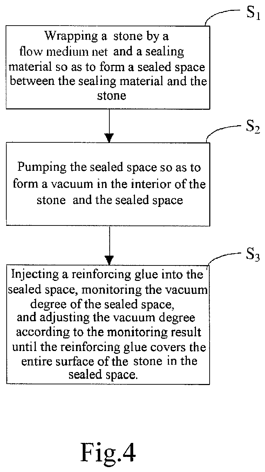

The wrapping manner of the diversion pipe 4 may be varied as required. In the present embodiment, cross-wrapping is preferably used for the manner by which the diversion pipe 4 wraps the stone block, that is, the diversion pipe 4 is intersected on one face of the stone block. In order to get a better effect of vacuum-pumping or injecting the reinforcing glue through the diversion pipe 4, in the present embodiment, the effect of the manner by which the diversion pipe wraps the stone block reflected in one face of the stone block is that the diversion pipe 4 is aligned in the transverse direction and longitudinal direction. Here, the transverse direction refers to the direction parallel to the horizontal edge of the stone block in Fig. 4, and the longitudinal direction refers to the direction perpendicular to the horizontal edge of the stone block in the same plane.

In the present example, the diversion pipe 4 is a pipe provided with an opening at its side edge or a strip material with a longitudinally formed through groove.

Wherein, the opening of the diversion pipe 4 is 3 mm to 20 mm.

It should be noted that, the diversion pipe 4 is a pipe provided with an opening at the side edge, here, the side edge is relative to the part where the diversion pipe 4 contacts with the plastic membrane 1, that is, the side edge of the diversion pipe 4 refers to the parts except for where the diversion pipe contacts with the plastic membrane. The plastic membrane will not cover the opening in the diversion pipe 4 when vacuum-pumping. Of course, the opening position on the diversion pipe 4 may also be provided on the side of the diversion pipe 4 close to the stone block.

Of course, the diversion pipe 4 may also be a strip material with a longitudinally formed through groove. Here, the through groove means a groove extending from one end of the diversion pipe 4 to the other end along the diversion pipe 4. The cross section shape of the through groove is selected to be semicircular or polygonal, and other irregular shapes may also be used, that is, it may preferably be an omega-shaped or herringbone-shaped.

A nozzle 6 is provided on the diversion pipe 4, and the gas nozzle 6 is connected to a vacuum-pumping device. Wherein, the vacuum-pumping device comprises a vacuum pump 12, which vacuum pump 12 is connected to the gas nozzle 6 via a vacuum pipe 8. The vacuum pipe 8 is provided with a check valve 9 for sealing the vacuum pipe 8 and preventing the back suction of the vacuum pump 12, thereby maintaining the vacuum state of the sealed space formed by the sealing material and the stone block. Wherein, a glue liquid separation tank 10 is provided on the vacuum pipe, and a vacuum degree display device 11 is provided on the glue liquid separation tank 10. In the present example, the vacuum degree display device is preferably a vacuum gauge, and other devices that can detect and display the current vacuum degree may be used. The check valve 9 is provided on the vacuum pipe between the glue liquid separation tank 10 and the vacuum pump 12.

It is to be noted that, the number of the gas nozzle may be one or more. In this example, one gas nozzle is provided at the intersection of each two diversion pipes. In this way, the speed of vacuum-pumping can be increased, and the risk of leakage which results from insufficient sealing due to excessive gas nozzles can be reduced.

The glue injection device in this example comprises a reinforcing glue container 15, which reinforcing glue container 15 is connected to the glue injection nozzle 18 on the diversion pipe via the glue pipe 14. Wherein, the number of the glue injection nozzle may be one or more. In this example, one glue injection nozzle is provided at the intersection of each two diversion pipes, and by using this way of setting the nozzles, the infusion efficiency of the reinforcing glue can be increased and the risk of leakage which results from insufficient sealing due to excessive gas nozzles can be effectively reduced.

Of course, in order to maintain the requirements of the vacuum degree during the glue injection process, after the stone block is wrapped and vacuum-pumped, it is connected with a vacuum tank, and then glue injection is conducted. If air comes into the space during the glue injection process, the air will enter into the vacuum tank because of the air pressure, the vacuum tank takes the place of the vacuum-pumping during the injection process to ensure that the vacuum degree of the stone block within the plastic membrane to meet the requirements.

An glue injection valve 13 is provided on the glue pipe 14 for controlling the infusion of the reinforcing glue. The number of the glue injection valve is the same as the number of the glue injection nozzle, and each glue injection nozzle is provided with an glue injection valve on the corresponding glue pipe.

Underneath the wrapping material is also provided with a loading plate 16 so as to facilitate the transport of the stone block before and after the reinforcement.

The operation process of the device for implementing the method for treating a stone block is as follows.

A loading plate 16 is placed on the stone block reinforcing platform, and the plastic membrane 1, the flow medium net 2 and the glass fiber net 3 for wrapping the stone block are selected according to the overall dimension of the stone block, and successively laid on the loading plate 16. The diversion pipe 4 is placed at a suitable place between the flow medium net 2 and the plastic membrane 1, the diversion pipe 4 at the bottom is connected with the glue injection nozzle 18, and the plastic membrane 1 is opened with a small hole so that the spout of the glue injection nozzle 18 is stretched out and the opening is sealed by a sealing tape 7. The stone block is hanged in and placed on the loading plate 16, and the rough block is wrapped with a glass fiber net 3, a flow medium net 2 and a plastic membrane 1 successively. The diversion pipe 4 is laid around the stone block and on the top of the stone block, the diversion pipes 4 at the bottom/around/top is connected to each other, and the top diversion pipe 4 is connected to the gas nozzle 6. The plastic membrane 1 is opened with a hole in a proper position of the plastic membrane 1 and the spout of the gas nozzle 6 is stretched out and sealed here by a sealing tape 7. The plastic membrane 1 is used to completely wrap the stone block which is wrapped with the glass fiber net 3 and the flow medium net 2. The interface of plastic membrane 1 is sealed by a sealing tape 7 so as to form a wrapped stone block; The glue injection nozzle 18 is connected with the reinforcing glue container 15 through the glue injection valve 13 and the glue pipe 14, and the gas nozzle 6 is connected with the glue liquid separation tank 10 through the vacuum pipe 8, and then the glue liquid separation tank 10 is connected with the vacuum pump 12 through the vacuum pipe 8 and the check valve 9. Close the glue injection valve 18 and start the vacuum pump 12, when the vacuum gauge needle on the glue liquid separation tank 10 points to -0.097 MPa, stop the vacuum pump, the vacuum degree not less than -0.095MPa after 30 minutes will be considered to be qualified. If it is not qualified, check and improve the sealing system until qualified. Open the glue injection valve, the reinforcing glue enters the diversion pipe 4 at the bottom of the stone block through the injection nozzle 18 and then enters into the entire surface of the stone block through the diversion pipe 4 and the flow medium net 2. If the vacuum degree is lower than -0.090MPa at this time, the vacuum pump 12 is started for vacuum-pumping to -0.097MPa, and the reinforcing glue fills with the surface of block in 10 minutes to 30 minutes, and penetrates into the interior through the cracks, meanwhile it fills with the internal surface of the glass fiber net 3, flow medium net 2 and plastic membrane 1. Close the glue injection valve 13, and the vacuum degree is maintained at -0.015MPa ∼ -0.090MPa until the preliminary curing of the reinforcing glue. Stop the vacuum pump 12, and strip off the diversion pipes and reinforcing glue within the diversion pipe on the top surface and cutting surface of the rough block with a scraper. The infused reinforcing glue for wrapping the stone block cures within 12 hours to 72 hours, achieving the conditions of handling, cutting, and the whole treating process of vacuum infusion and wrapping is completed.

## Claims

1. A method for treating a stone block, comprising the following steps of:
S₁, wrapping the stone block by a diversion pipe (4), and then wrapping the stone block by a sealing material (1) so as to form a sealed space between the sealing material (1) and the stone block;
S₂, pumping the sealed space through the diversion pipe (4) so as to form a vacuum in the sealed space,
S₃, injecting a reinforcing glue through the diversion pipe (4) into the sealed space, monitoring the vacuum degree of the sealed space, and adjusting the vacuum degree according to the monitoring result until the reinforcing glue covers the entire surface of the stone block in the sealed space,
wherein said monitoring the vacuum degree of the sealed space, and adjusting the vacuum degree according to the monitoring result are specifically as follows:
injecting a reinforcing glue through the diversion pipe (4) into the sealed space, and when the vacuum degree of the sealed space is monitored to be higher than a set value, stopping injecting the reinforcing glue, and pumping the sealed space until the vacuum degree is less than or equal to the set value, then stopping pumping the sealed space and proceeding to inject the reinforcing glue;
or,
injecting a reinforcing glue through the diversion pipe (4) into the sealed space, and when the vacuum degree of the sealed space is monitored to be higher than a set value, stopping injecting the reinforcing glue, and pumping the sealed space until the vacuum degree is less than or equal to the set value, then proceeding to inject the reinforcing glue while proceeding to pump the sealed space;
or,
injecting a reinforcing glue through the diversion pipe (4) into the sealed space, and when the vacuum degree of the sealed space is monitored to be higher than a set value, injecting the reinforcing glue while pumping the sealed space until the vacuum degree is less than or equal to the set value, then stopping pumping the sealed space.

2. The method for treating a stone block according to claim 1, wherein the method further comprises the step of wrapping the stone block by a reinforcing material before wrapping the stone block with the diversion pipe (4).

3. The method for treating a stone block according to claim 2, wherein the reinforcing material is one or a combination of a glass fiber net (3) and a flow medium net (2).

4. The method for treating a stone block according to claim 1, wherein, in step S₂, a vacuum is formed in the sealed space, and the vacuum degree of the sealed space is α, wherein α ≤ -0.097 MPa.

5. The method for treating a stone block according to claim 1, wherein after step S₂, the method further comprising detecting whether the vacuum degree is less than or equal to -0.09 MPa in a set time threshold, wherein if the vacuum degree is less than or equal to -0.09 MPa, step S₃ is performed.

6. The method for treating a stone block according to claim 5, wherein the set time threshold is greater than or equal to 30 minutes.

7. The method for treating a stone block according to claim 1, wherein the set value is -0.097 MPa.

8. The method for treating a stone block according to claim 1, wherein after step S₃, the method further comprising monitoring the vacuum degree of the sealed space, and adjusting the vacuum degree according to the monitoring result, which is specifically as follows:
when the vacuum degree of the sealed space is monitored beyond a set value range, pumping the sealed space.

9. The method for treating a stone block according to claim 8, wherein the set value ranges from -0.015 MPa to -0.090 MPa.

10. The method for treating a stone block according to claim 8, wherein the set value ranges from -0.030 MPa to -0.080 MPa.

11. The method for treating a stone block according to claim 1, wherein the sealing material (1) is a plastic membrane, and the plastic membrane is any one of:
a multi-layer composite membrane of nylon and polyester;
a multi-layer composite membrane of nylon and polyethylene;
a multi-layer composite membrane of nylon and ethylene vinyl acetate copolymer and polyethylene.

12. The method for treating a stone block according to claim 1, wherein the sealing material (1) is sealed by a sealing tape or sealed by way of hot melting.

## Patentansprüche

1. Verfahren zum Behandeln eines Steinblocks, das die folgenden Schritte umfasst:
S₁, Umwickeln des Steinblocks mit einem Umleitungsrohr (4) und anschließendes Umwickeln des Steinblocks mit einem Dichtungsmaterial (1), um einen abgedichteten Raum zwischen dem Dichtungsmaterial (1) und dem Steinblock zu bilden;
S₂, Pumpen des abgedichteten Raums durch das Umleitungsrohr (4), um ein Vakuum in dem abgedichteten Raum zu bilden,
S₃, Einspritzen eines Verstärkungsklebers durch das Umleitungsrohr (4) in den abgedichteten Raum, Überwachen des Vakuumgrades des abgedichteten Raums und Einstellen des Vakuumgrads gemäß dem Überwachungsergebnis, bis der Verstärkungskleber die gesamte Oberfläche des Steinblocks im abgedichteten Raum bedeckt,
wobei das Überwachen des Vakuumgrades des abgedichteten Raums und das Einstellen des Vakuumgrades gemäß dem Überwachungsergebnis spezifisch wie folgt sind:
Verstärkungskleber wird durch das Umleitungsrohr (4) in den abgedichteten Raum eingespritzt, und wenn überwacht wird, dass der Vakuumgrad des abgedichteten Raums höher als ein eingestellter Wert ist, wird das Einspritzen des Verstärkungsklebers gestoppt und der abgedichtete Raum wird gepumpt, bis der Vakuumgrad kleiner oder gleich dem eingestellten Wert ist, dann wird das Pumpen des abgedichteten Raums gestoppt und mit dem Einspritzen des Verstärkungsklebers fortgefahren;
oder
ein Verstärkungskleber wird durch das Umleitungsrohr (4) in den abgedichteten Raum eingespritzt, und wenn überwacht wird, dass der Vakuumgrad des abgedichteten Raums höher als ein eingestellter Wert ist, wird das Einspritzen des Verstärkungsklebers gestoppt, und der abgedichtete Raum wird gepumpt, bis der Vakuumgrad kleiner oder gleich dem eingestellten Wert ist, dann wird mit dem Einspritzen des Verstärkungsklebers fortgefahren, während mit dem Pumpen des abgedichteten Raums fortgefahren wird;
oder
ein Verstärkungskleber wird durch das Umleitungsrohr (4) in den abgedichteten Raum eingespritzt, und wenn überwacht wird, dass der Vakuumgrad des abgedichteten Raums höher als ein eingestellter Wert ist, wird der Verstärkungskleber eingespritzt, während der abgedichtete Raum gepumpt wird, bis der Vakuumgrad kleiner oder gleich dem eingestellten Wert ist, und dann wird das Pumpen des abgedichteten Raums gestoppt.

2. Verfahren zum Behandeln eines Steinblocks nach Anspruch 1, wobei das Verfahren ferner den Schritt des Umwickelns des Steinblocks mit einem Verstärkungsmaterial umfasst, bevor der Steinblock mit dem Umleitungsrohr (4) umwickelt wird.

3. Verfahren zum Behandeln eines Steinblocks nach Anspruch 2, wobei das Verstärkungsmaterial eines oder eine Kombination eines Glasfasernetzes (3) und eines Strömungsmediennetzes (2) ist.

4. Verfahren zum Behandeln eines Steinblocks nach Anspruch 1, wobei in Schritt S₂ ein Vakuum in dem abgedichteten Raum gebildet wird und der Vakuumgrad des abgedichteten Raums α ist, wobei α ≤ -0,097 MPa ist.

5. Verfahren zum Behandeln eines Steinblocks nach Anspruch 1, wobei nach Schritt S₂ das Verfahren ferner das Erfassen umfasst, ob der Vakuumgrad in eines eingestellten Zeitschwellenwerts kleiner oder gleich -0,09 MPa ist, wobei Schritt S₃ ausgeführt wird, wenn der Vakuumgrad kleiner oder gleich -0,09 MPa ist.

6. Verfahren zum Behandeln eines Steinblocks nach Anspruch 5, wobei der eingestellte Zeitschwellenwert größer oder gleich 30 Minuten ist.

7. Verfahren zum Behandeln eines Steinblocks nach Anspruch 1, wobei der eingestellte Wert -0,097 MPa beträgt.

8. Verfahren zum Behandeln eines Steinblocks nach Anspruch 1, wobei nach Schritt S₃ das Verfahren ferner das Überwachen des Vakuumgrades des abgedichteten Raums und das Einstellen des Vakuumgrads gemäß dem Überwachungsergebnis umfasst, was insbesondere wie folgt ist:
wenn der Vakuumgrad des abgedichteten Raums über einen eingestellten Wertebereich hinaus überwacht wird, wird der abgedichtete Raum gepumpt.

9. Verfahren zum Behandeln eines Steinblocks nach Anspruch 8, wobei der eingestellte Wert im Bereich von -0,015 bis -0,090 MPa MPa liegt.

10. Verfahren zum Behandeln eines Steinblocks nach Anspruch 8, wobei der eingestellte Wert im Bereich von -0,030 bis -0,080 MPa liegt.

11. Verfahren zum Behandeln eines Steinblocks nach Anspruch 1, wobei das Dichtungsmaterial (1) eine Kunststoffmembran ist und die Kunststoffmembran eine ist aus:
einer mehrschichtigen Verbundmembran aus Nylon und Polyester;
einer mehrschichtigen Verbundmembran aus Nylon und Polyethylen;
einer mehrschichtigen Verbundmembran aus Nylon und Ethylenvinylacetatcopolymer und Polyethylen.

12. Verfahren zum Behandeln eines Steinblocks nach Anspruch 1, wobei das Dichtungsmaterial (1) durch ein Dichtungsband abgedichtet oder durch Heißschmelzen abgedichtet wird.

## Revendications

1. Procédé de traitement d'un bloc de pierre, comprenant les étapes suivantes :
S₁, l'enveloppement du bloc de pierre par un tuyau de dérivation (4), puis l'enveloppement du bloc de pierre par un matériau d'étanchéité (1) de manière à former un espace étanche entre le matériau d'étanchéité (1) et le bloc de pierre ;
S₂, le pompage de l'espace étanche à travers le tuyau de dérivation (4) de manière à former un vide dans l'espace étanche,
S₃, l'injection d'une colle de renforcement à travers le tuyau de dérivation (4) dans l'espace étanche, le contrôle du degré de vide de l'espace étanche et le réglage du degré de vide en fonction du résultat du contrôle jusqu'à ce que la colle de renforcement recouvre toute la surface du bloc de pierre dans l'espace étanche,
dans lequel le dit contrôle du degré de vide de l'espace étanche et le réglage du degré de vide en fonction du résultat du contrôle sont spécifiquement les suivants :
l'injection d'une colle de renforcement à travers le tuyau de dérivation (4) dans l'espace étanche, et lorsque le degré de vide de l'espace étanche est contrôlé comme étant supérieur à une valeur de consigne, l'arrêt de l'injection de la colle de renforcement, et le pompage de l'espace étanche jusqu'à ce que le degré de vide soit inférieur ou égal à la valeur de consigne, puis l'arrêt de pompage de l'espace étanche et le passage à l'injection de la colle de renforcement ;
ou,
l'injection d'une colle de renforcement à travers le tuyau de dérivation (4) dans l'espace étanche, et lorsque le degré de vide de l'espace étanche est contrôlé comme étant supérieur à une valeur de consigne, l'arrêt de l'injection de la colle de renforcement et le pompage de l'espace étanche jusqu'à ce que le degré de vide soit inférieur ou égal à la valeur de consigne, puis le passage à l'injection de la colle de renforcement durant le passage au pompage de l'espace étanche ;
ou,
l'injection d'une colle de renforcement à travers le tuyau de dérivation (4) dans l'espace étanche, et lorsque le degré de vide de l'espace étanche est contrôlé comme étant supérieur à une valeur de consigne, l'injection de la colle de renforcement durant le pompage de l'espace étanche jusqu'à ce que le degré de vide soit inférieur ou égal à la valeur de consigne, puis l'arrêt du pompage de l'espace étanche.

2. Procédé de traitement d'un bloc de pierre selon la revendication 1, dans lequel le procédé comprend en outre l'étape d'enveloppement du bloc de pierre par un matériau de renforcement avant l'enveloppement du bloc de pierre au moyen du tuyau de dérivation (4).

3. Procédé de traitement d'un bloc de pierre selon la revendication 2, dans lequel le matériau de renforcement est un filet ou une combinaison de filets parmi un filet de fibre de verre (3) et un filet de milieu d'écoulement (2).

4. Procédé de traitement d'un bloc de pierre selon la revendication 1, dans lequel, à l'étape S₂, un vide est formé dans l'espace étanche, et le degré de vide de l'espace étanche est α, dans lequel α ≤ -0,097 MPa.

5. Procédé de traitement d'un bloc de pierre selon la revendication 1, dans lequel après l'étape S₂, le procédé comprend en outre le fait de détecter si le degré de vide est inférieur ou égal à -0,09 MPa à un seuil de temps prédéterminé, dans lequel, si le degré de vide est inférieur ou égal à -0,09 MPa, l'étape S₃ est exécutée.

6. Procédé de traitement d'un bloc de pierre selon la revendication 5, dans lequel le seuil de temps prédéterminé est supérieur ou égal à 30 minutes.

7. Procédé de traitement d'un bloc de pierre selon la revendication 1, dans lequel la valeur de consigne est de -0,097 MPa.

8. Procédé de traitement d'un bloc de pierre selon la revendication 1, dans lequel après l'étape S₃, le procédé comprend en outre le contrôle du degré de vide de l'espace étanche, et le réglage du degré de vide en fonction du résultat du contrôle, qui est spécifiquement le suivant :
lorsque le degré de vide de l'espace étanche est contrôlé au-delà d'une plage de valeurs de consigne, le pompage de l'espace étanche.

9. Procédé de traitement d'un bloc de pierre selon la revendication 8, dans lequel la valeur de consigne est dans la plage de -0,015 MPa à -0,090 MPa.

10. Procédé de traitement d'un bloc de pierre selon la revendication 8, dans lequel la valeur de consigne est dans la plage de -0,030 MPa à -0,080 MPa.

11. Procédé de traitement d'un bloc de pierre selon la revendication 1, dans lequel le matériau d'étanchéité (1) est une membrane plastique, et la membrane plastique est l'une quelconque parmi :
une membrane composite multicouche de nylon et de polyester ;
une membrane composite multicouche de nylon et de polyéthylène ;
une membrane composite multicouche de nylon et de copolymère éthylène-acétate de vinyle et de polyéthylène.

12. Procédé de traitement d'un bloc de pierre selon la revendication 1, dans lequel le matériau d'étanchéité (1) est rendu étanche par un chatterton d'étanchéité ou rendu étanche par fusion à chaud.
